# FASCICULE DE BREVET EUROPEEN

(11) **EP 2 023 533 B1**
(45) Date de publication et mention de la délivrance du brevet: **06.04.2011**
(21) Numéro de dépôt: 07290995.5
(22) Date de dépôt: 10.08.2007
(51) Int. Cl.: H04L 29/06, H04L 12/24

(54) **Procédé et installation de classification de trafics dans les réseaux IP**
Verfahren und Vorrichtung zur Klassifizierung von Datenverkehr in IP-Netzen
Method and system for classifying traffic in IP networks

(43) Date de publication de la demande: 11.02.2009
(73) Titulaire: Alcatel Lucent, 75008 Paris (FR)
(72) Inventeur: Clevy, Laurent Alcatel Lucent, 75008 Paris (FR); Martin, Antony Alcatel Lucent, 75008 Paris (FR); El Abed, Haithem Alcatel Lucent, 75008 Paris (FR); Ansiaux, Arnaud Alcatel Lucent, 75008 Paris (FR)
(74) Mandataire: Shamsaei Far, Hassan

(56) Documents cités:
- EP-A- 1 764 951
- ZHANG Y ET AL: "Detecting Backdoors" PROCEEDINGS OF THE USENIX SECURITY SYMPOSIUM, 14 août 2000 (2000-08-14), XP002307607
- BONFIGLIO D ET AL: "Revealing skype traffic: when randomness plays with you" PROCEEDINGS OF ACM SIGCOMM, [Online] 1 juillet 2007 (2007-07-01), pages 37-48, XP007903883 Extrait de l'Internet: URL:http://www.sigcomm.org/ccr/drupal/?q=n ode/245> [extrait le 2008-01-23]
- YAXUAN QI ET AL: "Performance Evaluation and Improvement of Algorithmic Approaches for Packet Classification" PROCEEDINGS OF THE JOINT INTERNATIONAL CONFERENCE ON AUTONOMIC AND AUTONOMOUS SYSTEMS AND INTERNATIONAL CONFERENCE ON NETWORKING AND SERVICES (ICAS-ICNS), PAPETTE, TAHITI, 23-28 OCT. 2005, 23 octobre 2005 (2005-10-23), XP010864800 ISBN: 0-7695-2450-8
- SHANMUGASUNDARAM K ET AL: "Nabs: A System for Detecting Resource Abuses via Characterization of Flow Content Type" PROCEEDINGS OF THE 20TH ANNUAL COMPUTER SECURITY APPLICATIONS CONFERENCE (ACSAC), TUCSON, AZ, USA 06-10 DEC. 2004, 6 décembre 2004 (2004-12-06), XP010757417 ISBN: 0-7695-2252-1

## Description

L'invention se rapporte au domaine technique des réseaux IP de télécommunications ou d'entreprises et plus particulièrement du contrôle des trafics, pour le repérage, la classification et le filtrage d'applications.

L'invention concerne notamment les techniques de classification d'applications dont le flux est chiffré : par exemple applications de type pair à pair (notamment VoIP *Skype*) ; VPN (*Virtual Private Network*) d'entreprise, applications pour tunnels https.

Techniquement possible, l'accès libre, gratuit et sans limite aux oeuvres protégées par le droit d'auteur est par nature illégal, économiquement dangereux et doit donc être combattu. Alors que *Napster* ne permettait que le partage de fichiers musicaux en format MP3, les réseaux pair à pair permettent aujourd'hui notamment l'échange de vidéos, de jeux, de logiciels. Le haut débit permet le téléchargement d'un film d'une heure en seulement quelques minutes.

La preuve d'un téléchargement illicite est difficile à établir, pour des raisons juridiques et techniques, qui peuvent être résumées comme suit.

En premier lieu, un internaute utilisant un logiciel d'échange de pair à pair (*peer to peer* ou P2P) n'est pas nécessairement en infraction vis-à-vis des dispositions des lois relatives à la propriété littéraire et artistique. Certaines oeuvres peuvent être par nature ou par destination du domaine public (actes officiels, informations de presse). Par ailleurs, un grand nombre d'oeuvres sont du domaine public, par écoulement du temps. Le téléchargement peut être lié à un droit de visualisation ou d'écoute qui n'implique pas nécessairement un droit d'usage commercial, par exemple le site *DailyMotion* permet aux internautes de poster leurs propres vidéos et de regarder librement celles des autres internautes. Le pair à pair permet diverses activités entièrement légales comme le calcul réparti, les visioconférences, la messagerie instantanée.

Deuxièmement, le nombre de téléchargements potentiellement illicites est extrêmement élevé. Selon la Direction générale du Trésor et de la politique économique, la France comptait en 2005 huit millions d'utilisateurs occasionnels et 750 000 utilisateurs réguliers des réseaux de pair à pair. En France, le CNC (Centre National de la Cinématographie) estimait en 2005 à un million par jour le nombre des téléchargements audiovisuels illicites, ce nombre étant deux fois plus élevé que celui des spectateurs en salle. D'après l'OCDE, environ dix millions de personnes utilisaient les réseaux pair à pair en 2004, en progression de 30 % par rapport à 2003 (*OECD Information Technology Outlook 2004 : Peer to Peer networks in OECD countries*).

Troisièmement, les logiciels les plus utilisés aujourd'hui sont des logiciels libres (*open source*) créés par des communautés anonymes d'internautes. Il n'y a plus d'éditeur pour ces logiciels, cet état de fait répondant sans doute aux récentes décisions de justice dans lesquelles la responsabilité pénale des éditeurs de logiciel *peer to peer* avait été examinée (*Cour Suprême des Pays Bas 19 décembre 2003 Buma*/*Sterma c*/ *KaZaA ; Supreme Court of the United States 27 juin 2005 Metro-Goldwyn-Mayer v. Grokster).* Ces logiciels tels que *Kameléon, Mute, Share, Ants, Freenet, GNUnet, I2P* sont pourvus d'un système de cryptage rendant très difficile le filtrage et l'identification des utilisateurs. Il existe aussi des systèmes d'anonymisation de connexion, par exemple TOR (*The Onion Ring*)*.*

Quatrièmement, un internaute doit pouvoir télécharger, pour copie privée, des oeuvres à partir d'une source licite, sans toutefois disposer le plus souvent de moyens permettant d'être certain du caractère licite de la source. Ainsi, par exemple, le Tribunal de Grande Instance de Paris (N° d'affaire 0504090091) a reconnu dans sa décision du 8 décembre 2005 que le logiciel pair à pair *Kazaa*, permettant l'accès à plus d'un milliard de fichiers musicaux, ne permet pas de distinguer les fichiers d'oeuvres protégées par le droit d'auteur de ceux du domaine public.

Cinquièmement, le traitement généralisé des flux Internet ne peut être contraire aux dispositions légales protégeant la vie privée. Par exemple, le recueil des adresses IP d'internautes mettant à disposition des oeuvres protégées ne peut en principe acquérir de caractère nominatif que dans le cadre d'une procédure judiciaire. La lutte contre la contrefaçon de grande ampleur (téléchargement de milliers d'oeuvres) peut justifier la collecte de données personnelles. Le balayage continu et automatique des réseaux de pair à pair à des fins de statistiques est également possible, à condition que les données soient rendues anonymes. Les interceptions judiciaires ou administratives des communications sont, bien entendu, également possibles. En revanche, le traitement automatique, exhaustif et non anonyme des réseaux de pair à pair est contraire au respect de la vie privée.

Enfin, la connaissance de l'adresse IP n'implique pas toujours une identification de l'internaute.

Le téléchargement illicite, notamment le téléchargement d'oeuvres sans respect du droit d'auteur ou du copyright, présente deux aspects différents :
- le téléchargement de masse, à visées commerciales ;
- le téléchargement occasionnel, ponctuel, à titre privé ou communautaire.

Le téléchargement de masse à visées commerciales peut sans doute être combattu par les techniques communes de répression, notamment de la contrefaçon.

En revanche, pour le téléchargement occasionnel, des mesures techniques doivent être trouvées pour un traitement adapté d'une grande masse d'infractions qui, prises isolément, occasionnent un trouble limité, ces mesures techniques devant être compatibles avec les lois en vigueur protégeant la vie privée.

La reconnaissance par port est a priori envisageable, les routeurs équipant les réseaux des FAI (Fournisseurs d'Accès à Internet) offrent cette fonctionnalité (routeurs *Cisco, Juniper, Extreme Network, Foundry*)*.* Par exemple, le port 1214 est le port par défaut de *Kasttrack* (*KaZaA*)*,* les ports 4661, 4665 et 4672 sont utilisés par défaut par les applications *edonkey* et *eMule,* le port 6346 est le port par défaut de *BearShare, Gnutella, Lime Wire* et *Morpheus.* Des ports par défaut sont également associés aux applications *Direct Connect, WinMx, BitTorent, MP2P.* Cependant, la reconnaissance par port n'est pas suffisante pour identifier le trafic pair à pair : utilisation de ports configurables dans les applications pair à pair, allocation dynamique de ports, utilisation des ports standards (par exemples le port 53 DNS et le port 80 HTTP) pour les applications pair à pair. La plupart des applications P2P autorisent leurs utilisateurs à choisir manuellement le port qu'ils décident d'affecter au trafic P2P. Les applications P2P utilisent souvent des ports que les administrateurs internes doivent laisser ouverts, comme par exemple le port 80 dédié par défaut aux sites web.

Les principales mesures techniques de filtrage de trafics Internet proposées dans l'art antérieur peuvent être classées en trois grandes catégories : filtrage de protocoles, filtrage de contenus, filtrage sur poste de l'internaute.

Les solutions de filtrage de protocole se fondent sur la reconnaissance de signatures au niveau des trames réseau échangées depuis le poste client de l'internaute afin de déterminer par exemple s'il s'agit d'un flux *peer to peer* ou non. Un protocole définit les règles selon lesquelles une application ou un service échangent des données sur un réseau. Ces règles se traduisent en séquence de bits caractéristiques situées dans chaque paquet au delà des enveloppes (*headers*)*.* Cette séquence est variable selon la nature du paquet mais indépendante du contenu. Le filtrage de protocole doit permettre de distinguer par exemple :
- les protocoles classiques : smtp (*Simple Mail Transfer Protocol*)*,* http (*HyperText Transfer Protocol*) ;
- les protocoles *peer to peer* conventionnels : *eDonkey* (lancé par la société MetaMachine, a priori fermée depuis septembre 2006), *Bittorent , Fastrack (Kazaa, Kazaa Lite, IMesh) ;*
- les protocoles P2P cryptés: *Freenet, SoftEther, EarthStation 5, Filetopia.*

Actuellement, le filtrage de protocole est mis en oeuvre par des techniques d'analyses en profondeur des paquets, notamment le DPI ou *Deep Packet Inspection.* Cette analyse des paquets est proposée à l'état natif dans les routeurs PDML de la société Cisco, ou *Netscreen-IDP* de la société Juniper. Certaines sociétés proposent aux FAI de recourir à des boîtiers additionnels insérés en coupure dans le réseau (sociétés Allot boîtier *Netenforcer KAC1020, Packeteer PS8500 ISP*)*.* La société Cisco propose également un boîtier (*Cisco P_Cube*)*.*

La disponibilité du code source client, notamment pour les développement en mode Open Source ou équivalent permet d'analyser la manière dont ces protocoles sont mis en oeuvre, et le cas échéant de mettre en place une reconnaissance sur la partie amont du protocole (connexion, négociation, passage en mode crypté), lorsque cela est possible (pas pour eMule version brouillée, par exemple). Une telle solution est par exemple mise en place par la société Allot, qui affirme entre autres filtrer les protocoles *SoftEther, EarthStation5,* et *Filetopia.*

Le filtrage par protocole présente plusieurs inconvénients.

En premier lieu, un protocole visé par le filtrage n'est pas nécessairement signe d'une activité illégale, dès lors qu'il est à même de faire transiter aussi bien des données légales que des données illégales.

Par ailleurs, la mise en place de cryptage pourrait rendre inopérante ou complexifier fortement la détection des trames réseau. Ce cryptage pourrait être mis en place par modification de protocoles *peer to peer,* en faisant par exemple évoluer les trames de connexion ou le suffixe des fichiers, ce qui suppose une modification des applications clientes installées sur les postes de travail des internautes et des serveurs (*Kazaa, eDonkey, trackers Bittorent*). Le cryptage pourrait également être mis en place par emploi d'un protocole de tunneling de type SSL/HTTPS ou SSH (*Secure Shell*) par exemple. Certains protocoles pair à pair sont déjà cryptés, notamment *FreeNet* (programme japonais *Winny*), *SSL (SoftEther, EarthStation5, Filetopia), SSH (SoftEther).*

De plus, l'évolution du protocole Internet vers IPV6 va apporter, outre l'extension des plages d'adressage disponibles, des évolutions dans les fonctions d'authentification et de sécurité de TCP/IP, avec notamment la généralisation du protocole IPSec et des fonctions de chiffrement.

Le filtrage de contenu permet d'identifier et le cas échant de filtrer des flux sur la base d'éléments de niveau contenu :
- fichiers musicaux bruts WAV (*Waveform*)*,* MP3, MPC par exemple ;
- fichiers musicaux dans des formats liés aux solutions de DRM (AAC, VMA, Atrac+ par exemple) ;
- archives (ZIP, RAR, ACE par exemple) contenant des images de CD ou des ensembles de fichiers musicaux bruts.

La société Audible Magic propose un outil de filtrage de contenu (boîtier *CopySeense*)*.* La société Advestigo propose également une technique de filtrage de contenu décrite dans le document FR2887385.

Le filtrage sur poste de l'internaute permet d'identifier et le cas échéant d'interdire l'accès à un ensemble de fonctions sur le poste de l'internaute. Ces fonctions peuvent être au niveau :
- réseau, exemple fermeture de certains ports ou interdiction d'échanges avec des listes de nom DNS ou d'adresses IP répertoriées ;
- contenu, par exemple détection et alerte/interdiction en cas de création de fichiers de type MP3 par un applicatif (client P2P à l'issue d'un téléchargement) ;
- applicatif, par exemple détection et alerte ou interdiction du lancement de certaines applications sur le poste clients (par exemple client *eMule*)*.*

Divers outils de filtrage sur poste client sont disponibles : firewall, solutions de sécurité de type Cisco CSA ou SkyRecon, solutions de contrôle parental type *CyberPatrol.*

Le filtrage à la demande présente plusieurs inconvénients.

Les utilisateurs de logiciels P2P ne seront pas nécessairement enclins à s'auto-filtrer et les parents auront du mal à imposer un abonnement filtré à leurs enfants. Le filtrage à la demande au niveau des FAI suppose la création d'une dérivation (par exemple routage et tunnels) vers une plateforme susceptible de traiter l'ensemble des abonnements filtrés. Le filtrage sur postes des internautes ne permet pas l'observation et l'analyse de trafic ou le filtrage systématique des flux ou la mise en place de radars.

Le document EP 1764 951 issu décrit une classification statistique en temps réel du trafic au niveau d'un noeud de réseau de communication. Cette classification nécessite un apprentissage off line au cours duquel les paquets sont captés de manière aléatoire. Une analyse statistique approfondie (Nearest Neughbour, Linear Discriminant Analysis) est mise en oeuvre sur ces paquets. Les identifiants et les paramètres statistiques (taille médiane des paquets, taille moyenne des paquets, temps de retard moyen inter-paquets) sont tabulés.

L'invention vise à apporter une solution à au moins une partie des problèmes mentionnés. L'invention vise en particulier à apporter une solution aux problèmes de qualité de service QoS dans les réseaux IP de télécommunications et les réseaux d'entreprises.

A cette fin, l'invention se rapporte, selon un premier aspect, à un procédé de classification de trafics sur réseaux IP/réseaux de télécommunications ou d'entreprises, ce procédé comprenant une étape de capture de trafic et une étape d'analyse approfondie des paquets (DPI notamment), ce procédé comprenant une étape de classification statistique des trafics par arbre de décision.

Avantageusement, l'étape de classification statistique des trafics est effectuée après l'analyse approfondie des paquets (DPI notamment) et ne concerne que les trafics qui n'ont pas été identifiés par cette analyse de paquets, notamment les trafics chiffrés, par exemple mettant en oeuvre des protocoles pair à pair cryptés.

Avantageusement, le procédé comprend une étape d'échanges d'informations entre une étape d'analyse approfondie de paquets, une étape d'analyse statistique de trafic par arbre de décision, lorsqu'un trafic non identifié par analyse approfondie de paquets est reconnu par analyse statistique comme appartenant à une application connue, en particulier une application non chiffrée.

Avantageusement, d'une part l'arbre de décision n'est pas binaire (ce qui optimise la discrimination), et d'autre part l'entropie est employée comme critère de séparation. Dans une mise en oeuvre, l'arbre de décision est de type C4.5 ou C5.0. Avantageusement, l'arbre comprend une étape de conversion de l'arbre de décision en règles.

Avantageusement, le procédé comprend une étape d'optimisation des dites règles.

La capture est notamment effectuée, par exemple sur un routeur, à l'aide d'un logiciel renifleur de paquets ou par copie dans une base de données. Des paramètres prédéterminés, sont extraits des éléments capturés, ces paramètres servant à la définition des critères de séparation pour au moins un noeud de l'arbre de décision. Les paramètres prédéterminés sont choisis parmi le groupe comprenant : taille des paquets, intervalles de temps entre paquets, nombre de paquets, numéro de port utilisé, numéro de paquet, nombre d'adresse IP différentes en relation avec une adresse IP donnée.

L'invention se rapporte, selon un deuxième aspect, à une installation de classification de trafics sur réseaux IP/réseaux de télécommunications ou d'entreprises, cette installation comprenant des moyens de capture de trafic et des moyens d'analyse approfondie des paquets, cette installation comprenant des moyens de classification statistique des trafics par règles issues de la conversion de l'arbre de décision.

Avantageusement, les moyens de capture, d'analyse de paquets et de classification statistique sont intégrés dans un seul boîtier. Dans une mise en oeuvre, l'installation peut être disposée en coupure entre un réseau interne et au moins un réseau externe.

D'autres objets et avantages de l'invention apparaîtront à la lumière de la description faite ci-après en référence aux dessins annexés dans lesquels :
- la figure 1 est un diagramme représentant une mise en oeuvre d'un procédé de génération de règles pour la classification de trafic Internet ;
- la figure 2 est un diagramme représentant une mise en oeuvre d'un procédé de surveillance et d'interception de communication utilisant des règles déjà générées.

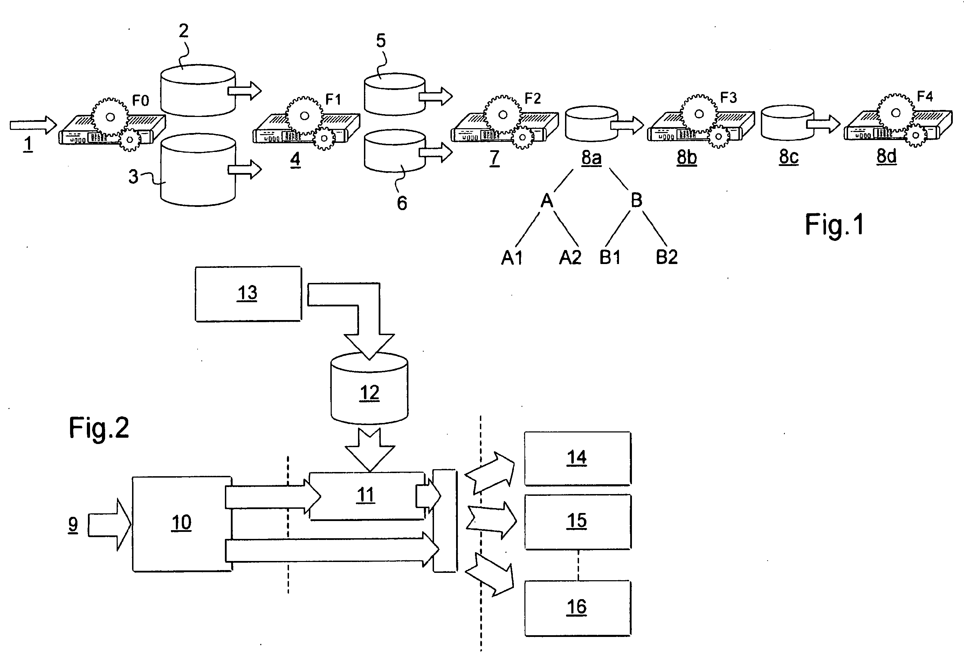

On se reporte tout d'abord à la figure 1.

Un flux de données 1, par exemple un trafic Internet, est capturé. Cette capture F0 est par exemple effectuée à l'aide d'un logiciel renifleur de paquets (*packet sniffers*) tel que par exemple *tcpdump* ou *wireshark,* ces logiciels reconnaissant les protocoles les plus courants, ou bien encore par un logiciel de capture de paquets tel que *Winpcap.* Le cas échéant, la totalité du trafic est copiée, par exemple au niveau d'un routeur.

Afin de simplifier la description, on considère dans la suite de cette description que le trafic Internet capturé contient deux types de trafic, à savoir :
- du trafic qui n'est pas le trafic de l'application que l'on souhaite caractériser,
- du trafic chiffré (donc non inspectable par DPI) ou dont la signature est inconnue et pour lequel un arbre de décision est généré dans un premier temps de manière statistique, pour permettre la détection ultérieure de ce trafic. Cela peut être le cas pour du trafic de l'application pair à pair *eMule brouillé.*

A l'issue de la capture F0, les éléments capturés sont stockés dans deux bases de données 2, 3 correspondant chacune à un des deux types de trafic mentionnés ci-dessus.

Les éléments capturés stockés dans les bases de données 2, 3 sont transformés en F1 selon le même procédé pour être résumés. Des informations spécifiques sont extraites des éléments capturés. Ces informations sont par exemple les suivantes :
- pour les couches trois et quatre du modèle OSI (*Open System Interconnection*): informations IP, TCP, UDP, ICMP ;
- taille de paquet, nombre de paquets, numéro de port, intervalles de temps entre les paquets, numéro de paquet, quantité d'adresses IP uniques avec lesquelles une adresse IP est en relation.

Le choix des informations extraites découle de la connaissance acquise des protocoles P2P. Par exemple, *eDonkey, Fasttrack, WinMx, Gnutella, MP2Pet Direct Connect* utilisent en principe à la fois TCP (*Transmission Control Protocol*) et UDP (*User Datagram Protocol*) comme protocoles de transport pour la couche quatre du modèle OSI. L'évolution dans le temps du couple adresse IP/numéro de port peut illustrer un changement aléatoire de numéro de port, usuelle pour certains protocoles P2P.

Les techniques d'analyse approfondie de paquets sont connues en elles-mêmes. On peut se reporter, par exemple, aux documents suivants : «Accurate, scalable in-network identification of the P2P traffic using application signatures» Subhabrata Sen et al (Proceedings of the 13th international conference on world wide web, New York 2004); "Transport layer identification of P2P traffic" Karagiannis et al (Proceedings of the 4th ACM SIGCOMM Conference on Internet Measurement, Taomina, Italy, 2004). L'analyse des paquets permet l'identification de certains protocoles pair à pair. Des exemples de signatures pour les protocoles *Gnutella, eDonkey, BitTorrent et Kazaa* sont donnés dans le document publié par Subhbrata Sen et al mentionné ci-dessus. Pour le réseau MP2P, employant les logiciels *Blubster* ou *Piolet,* une analyse des paquets sur un port aléatoire laisse apparaître la réponse « SIZ<file size in bytes ».

En effet, lorsque l'analyse approfondie des paquets ou la détection de port ne permet pas d'identifier le programme utilisé, certaines informations accessibles au niveau message TCP/UDP/ICMP restent cependant pertinentes : ces informations sont le plus souvent inchangées par cryptage. Un algorithme de cryptage symétrique en flux (*stream cipher*) ne modifie pas la taille du texte. Les intervalles de temps séparant les messages TCP/UDP/ICMP sont proportionnellement constants après compression.

Les informations transformées en F1 par un module de transformation 4 sont stockées dans deux bases de données 5 et 6 correspondant chacune à un des deux types de trafic mentionnés auparavant.

Un arbre de décision prend en entrée les informations stockées dans les bases de données 5 et 6, en sachant à quel type de trafic elles se réfèrent, et l'arbre est ainsi généré en F2 par un module 7 de génération d'arbre de décision. Cet arbre est stocké dans une base de données 8a.

La mise en oeuvre d'un classement par arbre de décision présente de nombreux avantages. Elle fournit des règles explicites de classement et supporte des données hétérogènes, manquantes, et des effets non linéaires.

Ainsi qu'il est connu en soit, les arbres de décision peuvent être construits à l'aide de différents critères de séparation des noeuds : critères de _{χ}2, indice de Gini, indice Twoing, entropie.

Avantageusement, le critère de séparation utilisé est l'entropie, définie, pour chaque noeud de l'arbre, par E fᵢlog(fᵢ), où les fᵢ i=1 à p, sont les fréquences relatives dans le noeud des p classes.

A titre d'exemple, la racine, premier noeud de l'arbre est la taille du quatrième paquet, cette variable séparant les trafics en deux classes A et B.

La première classe A est alors classifiée par la durée de l'intervalle séparant les premier et deuxième paquets, définissant ainsi deux sous classes A1 et A2. Pour la première sous classe A1, un noeud terminal (feuille) est défini par la taille du deuxième paquet, les individus affectés à cette feuille correspondant par exemple aux recherches de fichiers à l'aide du protocole crypté *eMule.*

La deuxième classe B est classifiée par la taille du troisième paquet, définissant ainsi deux sous classes B1 et B2. Pour la première sous classe B1, un noeud terminal (feuille) est défini par la taille du premier paquet, les individus affectés à cette feuille correspondant par exemple aux trafics web établis suivant le protocole de communication https, version sécurisée par SSL (*Secure Socket Layer*) du protocole http (*Hypertext Transfer Protocol*)*.* Pour la deuxième sous classe B2, un noeud terminal est défini par la taille du cinquième paquet, les individus affectés à cette feuille correspondant par exemple aux fichiers téléchargés à l'aide du protocole crypté *eMule.*

A titre d'exemple, l'arbre utilisé est un arbre C5.0, de 1998, perfectionnement réalisé par J. Ross Quinlan de ses arbres précédents ID3 (1986) et C4.5 (1993). Cet arbre est par exemple implémenté dans Entreprise Miner (société SAS) et Clementine (société SPSS). Il est également commercialisé sur les plateformes windows sous le nom de See5, le terme C5.0 étant employé pour les plateformes Unix. L'arbre est construit à partir d'un échantillon d'apprentissage, puis élagué en fonction des taux d'erreur et intervalle de confiance de chaque noeud.

L'arbre C5.0 n'est pas binaire : à chaque étape, il est possible de séparer une population en plus de deux populations.

L'arbre C5.0, tout comme sa version antérieure C4.5 présente en outre l'avantage suivant : une procédure transforme les arbres en ensemble de règles (voir module 8b de création de règles). Les règles redondantes sont supprimées et le programme tente de généraliser chaque règle en supprimant les conditions n'aboutissant pas à une diminution du taux d'erreur. La liste des règles est stockée dans une base de données 8c, le module 8d assurant la simplification de ces règles, au fur et à mesure de l'apprentissage.

Les noeuds de l'arbre de décision sont définis en fonction des objectifs de la classification du trafic.

Par exemple, si l'objectif est de détecter l'emploi d'un protocole déterminé, un petit nombre de critères sera nécessaire. Une entreprise pourra ainsi distinguer, dans les trafics chiffrés, les communications autorisées par VoIP (par exemple *Skype*)*,* et les transferts qu'elle n'a pas autorisés parce qu'effectués par certains protocoles (par exemple protocole crypté *eMule*)*.*

Si l'objectif est de détecter un comportement (téléchargement ou à l'inverse téléversement), des paramètres supplémentaires seront nécessaires pour former un arbre de décision plus profond.

Le nombre de règles peut avantageusement être adapté aux ressources du réseau équipé.

Dans une mise en oeuvre avantageuse, le module d'analyse statistique 11 informe le module 10 qu'un flux non identifié jusqu'ici semble appartenir à une application normalement détectée par le module 10. Les performances du procédé et de l'installation sont ainsi optimisées : le maximum de flux est traité par l'étage le plus adéquat. A titre d'exemple, lorsque le module 10 comprend un système de détection d'intrusion NIDS (*Bro, Snort, Shadow, NFR*) qui n'a pas détecté un flux non chiffré et qu'il a donc transmis au module 11, le module 11 peut transmettre des informations au module 10 pour qu'il affine ses analyses ultérieures.

Dans une mise en oeuvre avantageuse, le module 10 comprend un détecteur d'intrusion NIDS (par exemple BRO), informant le module d'analyse statistique 11, permettant un choix optimisé de règles. Par exemple, le module 10 indique au module 10 de ce qu'il a reconnu ou non du trafic interactif, avec valeur des intervalles entre paquets.

L'invention permet une identification précise d'applications, avec peu de faux positifs. Lors de la phase d'apprentissage du data mining, plusieurs milliers de connections sont effectuées pour une application visée (par exemple *Skype* ou *eMule*), l'arbre de décision permettant de déterminer les informations les plus spécifiques pour les trafics chiffrés associés à ces applications.

Le procédé et le dispositif de classification de trafic peuvent être employés avantageusement de la manière suivante.

### Blocage de trafic

Connecté au réseau interne de sa société, Bob souhaite échanger des fichiers avec son amie Alice, grâce au protocole pair à pair eMule. L'utilisation d*'eMule* n'est pas autorisée par l'entreprise. Bob lance l'application *eMule* sur son ordinateur ou sur son terminal. Le trafic 9 provenant de l'ordinateur de Bob est chiffré. Il parvient au module 10 d'analyse approfondie de paquets. Ce module 10 n'est pas en mesure d'identifier quelle application est associée au trafic 9 en particulier car il est chiffré. Le module 10 adresse le trafic inconnu au module 11 d'analyse statistique. Ce module 11 est connecté à une base de données 12 de règles de détection, règles établies préalablement à partir d'un arbre de décision. Ces règles de détection sont préalablement actualisées par un module 13 de génération automatique de règles. Le module d'analyse 11 reconnaît le protocole *eMule* et identifie l'adresse IP source, l'adresse IP de destination, le numéro de port source et le port de destination. L'information est transmise au système de gestion de réseau qui applique la mesure prévue dans un tel cas :
- interception, blocage du trafic 14 par pare feu, routeur, dispositif de détection ou de prévention d'intrusion,
- envoi d'un message 15 à Bob, dans l'optique d'une bonne qualité de services QoS ;
- ou toute autre mesure 16 prédéterminée.

### Interception de trafic

Une décision de justice a autorisé une interception des communications de Bob. L'agence en charge de cette interception s'assure que les règles de l'arbre de décision sont actualisées pour l'application visée et mises en place au routeur associé au terminal de Bob. Les flux de données émises ou reçues sur le terminal de Bob son copiées au routeur. Les flux chiffrés font d'abord l'objet d'une analyse approfondie de paquets (notamment *Deep Packet Inspection*). Puis, l'analyse statistique est effectuée. En fonction des résultats de cette dernière analyse, l'agence en charge de l'interception décide ou non de décrypter le contenu des données reçues ou émises par Bob. Connaitre l'application qui chiffre le trafic et identifier les paramètres des flux (numéros de ports et adresses IP) est une information importante pour ce type d'usage.

L'invention présente de nombreux avantages.

Elle permet aux agences gouvernementales, aux fournisseurs de services Internet de contrôler efficacement, rapidement et avec précision certains trafics sur réseaux, par exemple pour les bloquer. L'emploi de protocoles dont les spécifications sont inconnues, ou l'emploi de protocoles d'échanges de données cryptés peut être un signe d'activités délictueuses, ou criminelles : copies de fichiers musicaux ou vidéos sans respect des droits d'auteur, ventes illégales (produits contrefaits, produits issus de vols), contenus interdits (diffusion de données confidentielles, contenus à caractère sexuel).

L'invention permet également aux gestionnaires de réseau d'entreprise de contrôler le bon usage du réseau, et d'augmenter la qualité de service, la bande passante étant moins encombrée de données prohibées et ne respectant pas la politique de sécurité de l'entreprise.

L'invention permet de conserver tous les avantages de l'analyse approfondie de paquets, pour les trafics non cryptés, tout en permettant une classification du trafic crypté.

Les règles de classification sont générées sur du trafic témoin identifié comme généré par l'application à reconnaître ultérieurement, et non écrites manuellement.

Par rapport aux techniques statistiques Bayesiennes, l'invention présente l'avantage de pouvoir être appliquée avec une grande précision pour des flux de données très importants. Les logiciels de data mining mettant en oeuvre des arbres de décision (*Microsft analysis services, Oracle data mining, Clementine, Statistical Data Miner, Insightful Miner, Enterprise Miner*) permettent de traiter des millions d'enregistrements.

## Revendications

1. Procédé de classification de trafics sur réseaux IP de télécommunications ou d'entreprises, ce procédé comprenant une étape de capture de trafic (9) et une étape d'analyse approfondie des paquet (10), **caractérisé en ce qu'**il comprend :
- une étape de classification des trafics non-identifiés par l'analyse approfondie en utilisant un arbre de décision généré statistiquement, dite étape d'analyse statistique (11);
- une étape d'échanges d'informations entre l'étape d'analyse approfondie de paquets et l'étape d'analyse statistique de trafic par arbre de décision.

2. Procédé selon la revendication 1, **caractérisé en ce que** des paramètres prédéterminés sont extraits des éléments capturés, ces paramètres servant à la définition des critères de séparation pour au moins un noeud de l'arbre de décision.

3. Procédé selon la revendication 2, **caractérisé en ce que** les paramètres prédéterminés sont choisis parmi le groupe comprenant : taille des paquets, intervalles de temps entre paquets, nombre de paquets, numéro de port utilisé, numéro du paquet, nombre d'adresse IP différentes en relation avec une adresse IP donnée.

4. Procédé selon l'une quelconque des revendications précédentes, **caractérisé en ce qu'**il comprend une étape d'échanges d'informations entre une étape d'analyse approfondie de paquets une étape d'analyse statistique de trafic par arbre de décision, lorsqu'un trafic non identifié par analyse approfondie de paquets est reconnu par analyse statistique comme appartenant à une application connue, en particulier une application non chiffrée.

5. Procédé selon l'une quelconque des revendications précédentes, **caractérisé en ce que** l'arbre de décision n'est pas binaire.

6. Procédé selon l'une quelconque des revendications précédentes, **caractérisé en ce que** l'entropie est employée comme critère de séparation.

7. Procédé selon l'une quelconque des revendications précédentes, **caractérisé en ce qu'**il comprend une étape de conversion de l'arbre de décision en règles.

8. Procédé selon l'une quelconque des revendications précédentes, **caractérisé en ce que** l'arbre de décision est de type C4.5 ou C5.0.

9. Procédé selon l'une quelconque des revendications précédentes, **caractérisé en ce que** la capture est effectuée à l'aide d'un logiciel renifleur de paquets ou par copie dans une base de données, notamment sur un routeur.

10. Installation de classification de trafics sur réseaux de télécommunications, cette installation comprenant des moyens de capture de trafic et des moyens d'analyse approfondie des paquets, **caractérisée en ce qu'**elle comprend :
- des moyens de classification statistique des trafics, non-identifiés par l'analyse approfondie, par règles issues de la conversion de l'arbre de décision généré statistiquement dite étape d'analyse statistique;
- des moyens d'échanges d'information entre l'étape d'analyse approfondie de paquets et l'étape d'analyse statistique de trafic par arbre de décision.

11. Installation selon la revendication 10, **caractérisée en ce que** les moyens de capture, d'analyse de paquets et de classification statistique sont intégrés dans un seul boîtier.

12. Installation selon la revendication 10 ou 11, **caractérisée en ce qu'**elle est disposée en coupure entre un réseau interne et au moins un réseau externe.

## Claims

1. A method for classifying traffic on IP telecommunications or corporate networks, which method comprises a step of capturing traffic (9) and a step of deeply analyzing the packets (10) **characterized in that** it comprises:
- a step of classifying unidentified traffic through a deep analysis using a statistically generated decision tree, known as a step of statistical analysis.
- a step of exchanging information between the step of deeply analyzing the packets and the step of statistically analyzing the traffic using a decision tree.

2. A method according to claim 1, **characterized in that** predetermined parameters are extracted from the captured elements, these parameters serving to define separation criteria for at least one node on the decision tree.

3. A method according to claim 2, **characterized in that** the predetermined parameters are chosen from among the group comprising: packet size, intervals of time between packets, number of packets, port number used, the packet's number, or different IP address numbers related to a given IP address.

4. A method according to any one of the preceding claims, **characterized in that** it comprises a step of exchanging information between a step of deeply analyzing the packets, a step of statistically analyzing the traffic using a decision tree, whenever a traffic unidentified by deep analysis of packets is recognized by statistical analysis as belonging to a known application, in particular an unencrypted application.

5. A method according to any one of the preceding claims, **characterized in that** the decision tree is not binary.

6. A method according to any one of the preceding claims, **characterized in that** entropy is employed as a separation criterion.

7. A method according to any one of the preceding claims, **characterized in that** it comprises a step of converting the decision tree into rules.

8. A method according to any one of the preceding claims, **characterized in that** the decision tree is a C4.5- or C5.0-generated decision tree.

9. A method according to any one of the preceding claims, **characterized in that** the capture is performed with the assistance of a packet-sniffer program or by being copied into a database, particularly on a router.

10. An installation for classifying traffic on telecommunications, which installation comprises means for capturing traffic and means for deep analysis of the packets, **characterized in that** it comprises:
- means for statistically classifying the traffic not identified by the deep analysis, by rules derived from the conversion of the statistically generated decision tree known as the step of statistical analysis;
- means of exchanging information between the step of deep analysis of packets and the step of statistically analyzing the traffic using a decision tree.

11. An installation according to claim 10, **characterized in that** the means of capturing and analyzing the packets and of statistical classification are incorporated into a single housing.

12. An installation according to claim 10 or 11, **characterized in that** it is placed as an interruption between an internal network and at least one external network.

## Patentansprüche

1. Verfahren zur Klassifikation von Verkehr auf IP-Telekommunikations- oder Unternehmensnetzwerken, wobei das Verfahren einen Schritt der Erfassung von Verkehr (9) und einen Schritt der gründlichen Analyse der Pakete (10) umfasst, **dadurch gekennzeichnet, dass** es umfasst:
- Einen Schritt der Klassifikation von nicht identifiziertem Verkehr anhand der gründlichen Analyse unter Verwendung eines statistisch erzeugten Entscheidungsbaums, dem sogenannten Schritt der statistischen Analyse (11);
- einen Schritt des Austausches von Informationen zwischen dem Schritt der gründlichen Analyse von Paketen und dem Schritt der statischen Analyse von Verkehr anhand eines Entscheidungsbaums.

2. Verfahren nach Anspruch 1, **dadurch gekennzeichnet, dass** vorbestimmte Parameter aus den erfassten Elementen extrahiert werden, wobei diese Parameter zur Bestimmung der Trennkriterien für mindestens einen Knoten des Entscheidungsbaums dienen.

3. Verfahren nach Anspruch 2, **dadurch gekennzeichnet, dass** die vorbestimmten Parameter in der Gruppe bestehend aus: der Größe der Pakete, den Zeitintervallen zwischen Paketen, der Anzahl der Pakete, der Nummer des benutzten Ports, der Nummer des Pakets, der Anzahl von unterschiedlichen IP-Adressen in Verbindung mit einer gegebenen IP-Adresse, gewählt werden.

4. Verfahren nach einem beliebigen der vorstehenden Ansprüche, **dadurch gekennzeichnet, dass** es einen Schritt des Austauschs von Informationen zwischen einem Schritt der gründlichen Analyse von Paketen und einem Schritt der statistischen Analyse des Verkehrs unter Verwendung eines Entscheidungsbaums umfasst, wenn ein von der gründlichen Analyse von Paketen nicht identifizierter Verkehr von der statistischen Analyse als ein einer bekannten Anwendung, insbesondere einer nicht chiffrierten Anwendung, angehörender Verkehr erkannt wird.

5. Verfahren nach einem beliebigen der vorstehenden Ansprüche, **dadurch gekennzeichnet, dass** der Entscheidungsbaum nicht binär ist.

6. Verfahren nach einem beliebigen der vorstehenden Ansprüche, **dadurch gekennzeichnet, dass** die Entropie als Trennkriterium verwendet wird.

7. Verfahren nach einem beliebigen der vorstehenden Ansprüche, **dadurch gekennzeichnet, dass** es einen Schritt der Umwandlung des Entscheidungsbaums in Regeln umfasst.

8. Verfahren nach einem beliebigen der vorstehenden Ansprüche, **dadurch gekennzeichnet, dass** der Entscheidungsbaum vom Typ C4.5 oder C5.0 ist.

9. Verfahren nach einem beliebigen der vorstehenden Ansprüche, **dadurch gekennzeichnet, dass** die Erfassung anhand einer Schnüffel-Software für Pakete oder durch das Kopieren in eine Datenbank, insbesondere auf einem Router, erfolgt.

10. Installation zur Klassifikation von Verkehr auf einem Telekommunikationsnetzwerk, wobei die besagte Installation Mittel für die Erfassung von Verkehr und Mittel für die gründliche Analyse der Pakete umfasst, **dadurch gekennzeichnet, dass** sie umfasst:
- Mittel zur statistischen Klassifikation von Verkehr, welcher von der gründlichen Analyse nicht erkannt wurde, anhand von aus der Umwandlung des statistisch erzeugten Entscheidungsbaums, dem sogenannten Schritt der statistischen Analyse, entstandenen Regeln;
- Mittel zum Austausch von Informationen zwischen dem Schritt der gründlichen Analyse von Paketen und dem Schritt der statischen Analyse von Verkehr anhand eines Entscheidungsbaums.

11. Installation nach Anspruch 10, **dadurch gekennzeichnet, dass** die Mittel zur Erfassung, zur Analyse von Paketen und zur statistischen Klassifikation in einem selben Gehäuse integriert sind.

12. Installation nach Anspruch 10 oder 11, **dadurch gekennzeichnet, dass** sie in Abtrennung zwischen einem internen Netzwerk und mindestens einem externen Netzwerk angeordnet ist.
